# EUROPEAN PATENT APPLICATION

(11) **EP 4 723 438 A1**
(43) Date of publication of application: **08.04.2026**
(21) Application number: 24858064.9
(22) Date of filing: 08.07.2024
(51) Int. Cl.: H02K 5/04, H02K 5/24

(54) **ELECTRIC MOTOR, WASHING DEVICE, DYNAMIC BALANCE ADJUSTING METHOD AND APPARATUS, AND ELECTRONIC DEVICE**

(30) Priority: 31.08.2023 CN 202311115949
(71) Applicant: Foshan Welling Washer Motor Manufacturing Co., Ltd., Foshan, Guangdong 528311 (CN); Huai'An Welling Motor Manufacturing Co., Ltd., Huai'an, Jiangsu 223005 (CN)
(72) Inventor: TANG, Weipeng, Foshan, Guangdong 528311 (CN); YANG, Wenyong, Foshan, Guangdong 528311 (CN); XIAO, Haiquan, Foshan, Guangdong 528311 (CN); QIAN, Cheng, Foshan, Guangdong 528311 (CN); ZHENG, Licheng, Foshan, Guangdong 528311 (CN); WU, Di, Foshan, Guangdong 528311 (CN)
(74) Representative: Ran, Handong
(86) International application number: PCT/CN2024/104172
(87) International publication number: WO 2025/044520

(57) **Abstract**

Provided in the present application are an electric motor, a washing device, a dynamic balance adjusting method and apparatus, and an electronic device. The electric motor comprises: a housing; a rotary component, wherein part of the rotary component is arranged in the housing, and two ends of the rotary component extend from the housing in the direction of the axis of rotation of the rotary component; and a balance machining portion arranged on the rotary component, wherein the balance machining portion is located in the housing or is located outside of the housing. A dynamic balance parameter of the electric motor can be adjusted by means of operating the balance machining portion; and when the balance machining portion is located in the housing, a clearance hole is provided in the housing, and the clearance hole is provided corresponding to the balance machining portion, so that the balance machining portion can be machined through the clearance hole. The vibration of the electric motor provided in the present application is improved; and when defective products having nonconforming dynamic balance occur, the electric motor does not need to be disassembled for repair, and the balance machining portion outside of the housing can be directly operated or the balance machining portion located inside the housing can be operated through the clearance hole, so as to adjust the overall dynamic balance of the electric motor

## Description

### CROSS-REFERENCE TO RELATED APPLICATIONS

This application claims priority to Chinese Patent Application No. 202311115949.1 filed with the China National Intellectual Property Administration on August 31, 2023 and entitled "ELECTRIC MOTOR, WASHING DEVICE, DYNAMIC BALANCE ADJUSTING METHOD AND APPARATUS, AND ELECTRONIC DEVICE", the entire content of which is incorporated herein by reference.

### FIELD

The present application relates to the field of electric motors, and specifically relates to an electric motor, a washing device, a dynamic balance adjusting method and apparatus, and an electronic device.

### BACKGROUND

At present, in related art, during the dynamic balance measurement of an electric motor, a dynamic balance processing process is performed at a rotor stage, after a rotor is driven to a certain rotation speed through methods such as belt dragging, a vibration signal is measured to calculate an imbalance value, and the imbalance amount of the rotor is adjusted to meet a qualified standard. However, in the related art, there is a discrepancy between the state of the rotor during the dynamic balance test of the rotor and the operating state of the rotor inside the electric motor, resulting in low dynamic balance accuracy. When defective products occur due to nonconforming dynamic balance, disassembly is required for repair, leading to a high repair cost.

### SUMMARY

The present application aims to solve at least one of the problems existing in the prior art or related art.

Thus, a first aspect of the present application provides an electric motor.

A second aspect of the present application provides a washing device.

A third aspect of the present application provides a dynamic balance adjusting method for an electric motor.

A fourth aspect of the present application provides a dynamic balance adjusting apparatus of an electric motor.

A fifth aspect of the present application provides an electronic device.

A sixth aspect of the present application provides a computer-readable storage medium.

In view of this, the first aspect of the present application provides an electric motor, comprising: a housing; a rotary component, wherein part of the rotary component is disposed in the housing, and two ends of the rotary component extend out of the housing in the direction of the axis of rotation of the rotary component; and a balance machining portion disposed on the rotary component, wherein the balance machining portion is located in the housing or is located outside the housing; a dynamic balance parameter of the electric motor can be adjusted by processing the balance machining portion; and in the case that the balance machining portion is located in the housing, a clearance hole is provided in the housing, and the clearance hole is provided corresponding to the balance machining portion, and the balance machining portion can be machined through the clearance hole.

According to the second aspect of the present application, a washing device is further provided, comprising the electric motor provided in any one of the above technical solutions.

According to the third aspect of the present application, a dynamic balance adjusting method for an electric motor is further provided, and applied to the electric motor provided in any one of the above first aspect. The adjusting method comprises: performing dynamic balance parameter measurement after the electric motor is assembled to acquire a first measured value; and processing a balance machining portion to make the dynamic balance parameter of the electric motor less than or equal to a first parameter threshold in the case that the first measured value is greater than the first parameter threshold.

The dynamic balance adjusting apparatus of an electric motor provided according to the fourth aspect of the present application comprises: a measurement unit configured to perform dynamic balance parameter measurement for the electric motor after its assembly is completed to acquire a first measured value; and a processing unit configured to process a balance machining portion to make the dynamic balance parameter of the electric motor less than or equal to a first parameter threshold in the case that the first measured value is greater than the first parameter threshold.

The electronic device provided according to the fifth aspect of the present application comprises: the dynamic balance adjusting apparatus of an electric motor provided in any one of the above items; and/or a processor and a memory, wherein the memory stores programs or instructions which can run in the processor. When the programs or instructions are executed by a processor, the steps of the dynamic balance adjusting method for an electric motor provided according to any one of the above items are implemented.

The computer-readable storage medium provided according to the sixth aspect of the present application stores programs or instructions therein; when the programs or instructions are executed by a processor, the dynamic balance adjusting method for an electric motor according to any one of the above items is implemented.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in conjunction with the following accompanying drawings, wherein:
FIG. 1 shows a first schematic view of the structure of an electric motor according to an embodiment of the present application;
FIG.2 shows a second schematic view of the structure of an electric motor according to an embodiment of the present application;
FIG.3 shows a third schematic view of the structure of an electric motor according to an embodiment of the present application;
FIG.4 shows a schematic view of the structure of an end cover according to an embodiment of the present application;
FIG.5 shows a fourth schematic view of the structure of an electric motor according to an embodiment of the present application;
FIG.6 shows a fifth schematic view of the structure of an electric motor according to an embodiment of the present application;
FIG.7 shows a sixth schematic view of the structure of an electric motor according to an embodiment of the present application;
FIG.8 shows a seventh schematic view of the structure of an electric motor according to an embodiment of the present application;
FIG.9 shows a flow chart of a dynamic balance adjusting method for an electric motor according to an embodiment of the present application;
FIG.10 shows a schematic block diagram of a dynamic balance adjusting apparatus of an electric motor according to an embodiment of the present application; and
FIG.11 shows a schematic block diagram of an electric device according to an embodiment of the present application.

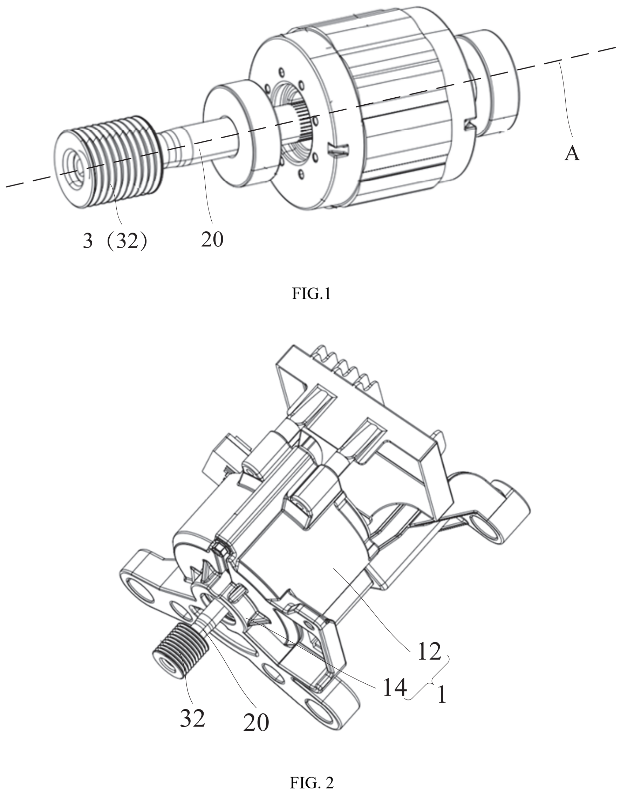

Wherein, the corresponding relationships between the reference signs and the component names in FIG. 1 toFIG.8, FIG. 10 and FIG. 11 are as follows:

1 housing, 10 clearance hole, 12 outer shell, 14 end cover, 2 rotary component, 20 rotating shaft, 22 rotor, 3 balance machining portion, 30 balance block, 300 balance ring, 32 belt pulley, 500 dynamic balance adjusting apparatus, 502 measurement unit, 504 processing unit,600 electronic device, 602 processor, 604 memory.

### DETAILED DESCRIPTION OF THE APPLICATION

To more clearly understand the above purposes, features and advantages of the embodiments of the present application, the embodiments of the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the embodiments of the present application can further be implemented using other embodiments other than these described herein. Therefore, the protection scope of the present application is not limited to the specific embodiments disclosed in the following text.

An electric motor, a washing device, a dynamic balance adjusting method and apparatus, and an electronic device according to some embodiments of the present application are described hereinafter by referring to FIG. 1 to FIG.11.

As shown in FIG. 1, FIG. 2, FIG. 3 and FIG. 4, according to an embodiment of the present application, the present application provides an electric motor, comprising: a housing 1, a rotary component 2 and a balance machining portion 3.

Specifically, part of the rotary component 2 is disposed in the housing 1, and two ends of the rotary component 2 extend from the housing 1 in the direction of the axis A of rotation of the rotary component 2; and the balance machining portion 3is disposed on the rotary component 2, wherein the balance machining portion 3 is located in the housing 1 or is located outside the housing 1; a dynamic balance parameter of the electric motor can be adjusted by processing the balance machining portion 3; and in the case that the balance machining portion 3 is located in the housing 1, a clearance hole 10 is provided in the housing 1, and the clearance hole 10 is provided corresponding to the balance machining portion 3, and the balance machining portion 3 can be machined through the clearance hole 10.

The electric motor provided by the present application comprises the housing 1, the rotary component 2 and the balance machining portion 3.Part of the rotary component 2 is disposed in the housing 1, and the housing 1can protect the rotary component 2, preventing external structures or dust from affecting the operation of the rotary component 2. The two ends of the rotary component 2 extend from the housing 1 to achieve power output of the rotary component 2. The balance machining portion 3 is disposed on the rotary component 2, wherein the balance machining portion 3 is disposed in the housing 1 or is disposed outside the housing 1.In the case that the balance machining portion 3 is disposed outside the housing 1, the overall dynamic balance parameter of the electric motor after its assembly is completed can be measured, and the balance machining portion 3 located outside the housing 1 can be processed to adjust the overall dynamic balance parameter of the electric motor. If a product with a nonconforming dynamic balance parameter occurs, there is no need to disassemble the electric motor for repair, to reduce the manufacturing cost. In the case that the balance machining portion 3 is disposed in the housing 1, a clearance hole 10 is provided in the housing 1, and the clearance hole 10 is disposed corresponding to the balance machining portion 3. Thus, after the electric motor is assembled, the dynamic balance measurement of the entire electric motor can be carried out, and the balance machining portion 3 located inside the housing 1 can be processed through the clearance hole 10 to adjust the overall dynamic balance parameter of the electric motor.

For the electric motor provided in the present application, the balance machining portion 3 is disposed outside the housing 1, or the balance machining portion 3 is disposed in the housing 1, and the clearance hole 10 for processing the balance machining portion 3 is disposed in the housing 1. Thus, the overall dynamic balance parameter of the electric motor after the electric motor is assembled can be adjusted, and the overall dynamic balance parameter of the electric motor meet requirements and the vibration condition of the electric motor is improved. In the case that defective products with nonconforming dynamic balance occur, there is no need to disassemble the electric motor for repair, and the balance machining portion 3 located outside the housing 1 can be directly processed, or the balance machining portion 3 located in the housing 1 can be processed through the clearance hole 10, to adjust the overall dynamic balance of the electric motor. In addition, when the dynamic balance of the electric motor is measured after its assembly is completed, the rotary component 2 can further be tested at an operating speed, to evaluate the dynamic balance of the electric motor in a normal operating state and effectively improving the vibration problem of the electric motor.

It should be noted that processing the balance machining portion 3 comprises adding weight to or reducing weight of the balance machining portion 3.

Exemplarily, in some embodiments, processing the balance machining portion 3 comprises at least one operation of cutting, drilling and dispensing the balance machining portion 3.

As shown in FIG. 2, FIG.3 and FIG.4, according to some embodiments of the present application, exemplarily, in some implementations, the housing 1 comprises: an outer shell 12, wherein the rotary component 2 is located inside the outer shell 12; and end covers 14, disposed at two ends of the outer shell 12 along the direction of the axis A of rotation, wherein, in the case that the balance machining portion 3 is located in the housing 1, the clearance hole10 is disposed in the end covers 14.

In the embodiment, the housing 1 comprises the outer shell 12 and the end covers 14. The end covers 14 are disposed at two ends of the outer shell 12 to form a space for accommodating the rotary component 2, wherein, the clearance hole 10 is disposed in the end covers 14, to facilitate the operation on the balance machining portion 3 and further facilitate the machining of the clearance hole 10.

Exemplarily, in some embodiments, the clearance hole 10 is disposed in at least one of the two end covers 14 at two ends of the outer shell 12.

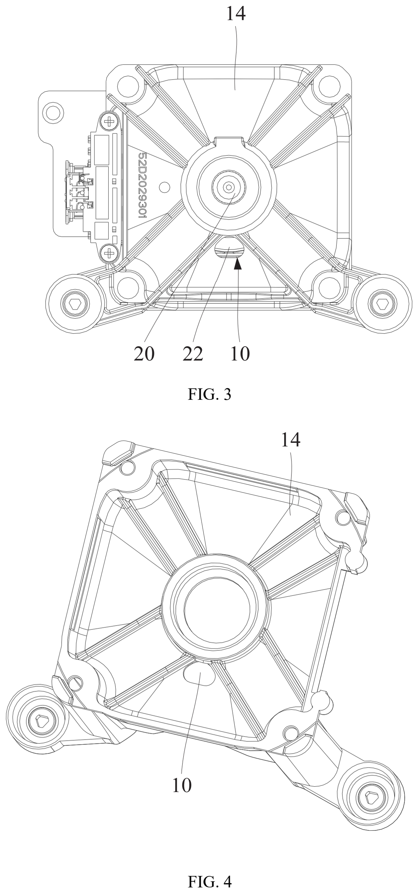

As shown in FIG. 3, according to some embodiments of the present application, exemplarily, in some implementations, the rotary component 2 comprises: a rotating shaft 20, wherein part of the rotating shaft 20 is disposed inside the outer shell 12, and two ends of the rotating shaft 20 extend from the end covers 14 to the outer side of the outer shell 12; and a rotor 22, disposed inside the outer shell 12 and connected to the rotating shaft 20, wherein, in the case that the balance machining portion 3 is located outside the housing 1, the balance machining portion 3 is disposed on at least one of the two ends of the rotating shaft 20; in the case that the balance machining portion 3 is disposed inside the outer shell 12, the balance machining portion 3 is disposed on the rotor 22.

In the embodiment, the rotary component 2 comprises the rotating shaft 20 and the rotor 22. The rotor 22 is disposed inside the outer shell 12, the two ends of the rotating shaft 20 pass through the outer shell 12, and the rotor 22 is connected to the rotating shaft 20, and the rotor 22 can drive the rotating shaft 20 to rotate. Wherein, in the case that the balance machining portion 3 is disposed on the outer side of the outer shell 12, the balance machining portion 3is disposed on at least one of the two ends of the rotating shaft 20. Thus, on the basis of testing the overall dynamic balance of the electric motor, the balance machining portion 3 can be processed to realize the adjustment of the overall dynamic balance of the electric motor. In the case that the balance machining portion 3 is disposed inside the outer shell 12, the balance machining portion 3is disposed on the rotor 22. Thus, after the overall dynamic balance of the electric motor is measured, the balance machining portion 3 on the rotor 22 can be processed through the clearance hole 10 to realize the adjustment of the overall dynamic balance of the electric motor.

According to some embodiments of the present application, exemplarily, in some implementations, in the case that the balance machining portion 3 is disposed on the rotor 22, the balance machining portion 3 is a part of the rotor 22.

In the embodiment, in the case that the balance machining portion 3 is disposed on the rotor 22, the balance machining portion 3 is a part of the rotor 22. After the assembly of the housing 1 of the electric motor, the adjustment of the overall dynamic balance of the electric motor is achieved by processing the rotor 22, and the dynamic balance of the electric motor meets the requirements even after the completion of assembly.

It can be understood that the balance machining portion 3 is a part of the rotor 22. After performing the dynamic balance test on the entire electric motor, if it is necessary to adjust the dynamic balance parameter, the rotor 22 can be directly processed through the clearance hole 10 to achieve the adjustment of the overall dynamic balance of the electric motor.

Certainly, the balance machining portion 3 can further be an independent component disposed on the rotor 22.

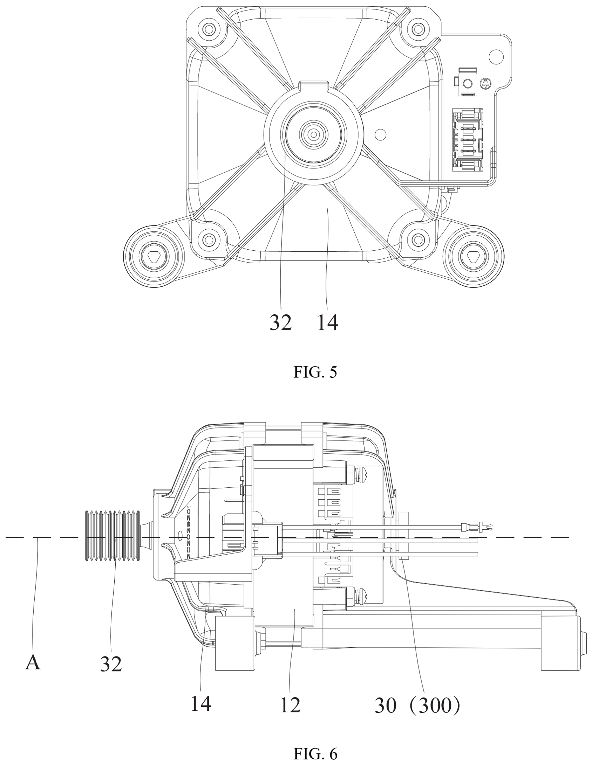

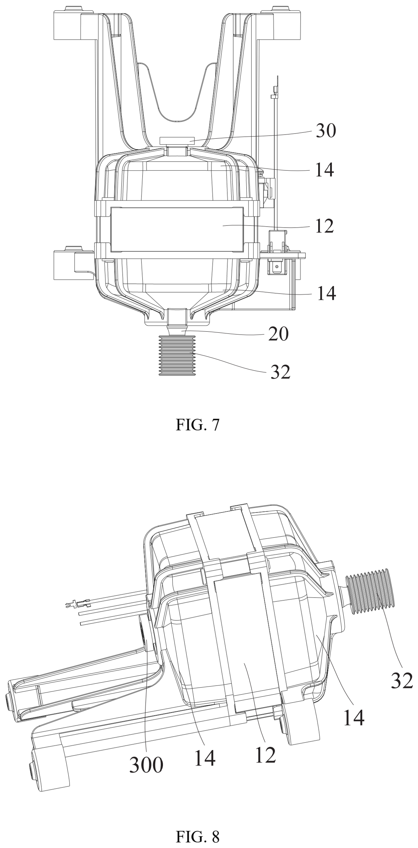

As shown in FIG. 6 and FIG. 7, according to some embodiments of the present application, exemplarily, in some implementations, the balance machining portion 3 comprises a balance block 30.

In the embodiment, the balance machining portion 3 comprises the balance block 30. After testing the overall dynamic balance parameter of the electric motor, if it is necessary to adjust the dynamic balance parameter, the balance block 30 can be processed to achieve the adjustment of dynamic balance. This method does not require processing the rotary component 2 itself, thus ensuring the overall strength of the rotary component 2 (e.g., the rotating shaft 20 and the rotor 22).

As shown in FIG. 8, according to some embodiments of the present application, exemplarily, in some implementations, the balance block 30 comprises a balance ring 300, which is disposed around the outer side of the rotating shaft 20.

In the embodiment, the balance ring 300 is annularly disposed around the outer side of the rotating shaft 20, which improves the balance performance of the rotating shaft 20 and prevents the rotating shaft 20 from tilting due to the arrangement of the balance ring 300. Meanwhile, during performing the weight addition or removal operation on the balance ring 300, it is further conducive to improving the reliability of dynamic balance adjusting.

As shown in FIG. 5, FIG.6, FIG.7 and FIG.8, according to some embodiments of the present application, exemplarily, in some implementations, the balance machining portion 3 comprises a belt pulley 32, which is disposed on the rotating shaft 20.

In the embodiment, the balance machining portion 3 comprises the belt pulley32, which is disposed on the rotating shaft 20. The rotation of the rotating shaft 20 can drive the belt pulley 32 to rotate, to enable the operation of other structures connected to the belt pulley 32. For the electric motor provided in the present application, the belt pulley 32 can not only connect other components to realize power transmission, but further achieve dynamic balance adjusting, which saves the space occupied by the balance machining portion 3 and is conducive to the miniaturized design of the structure.

It can be understood that when the electric motor is applied to electrical equipment, the electric motor can be connected to other structures through the belt pulley 32 to achieve driving other structures.

Exemplarily, in some implementations, the electric motor is applied to a washing device, and drives the drum of the washing device to rotate through the belt pulley 32, to realize the treatment of clothes.

Exemplarily, in some implementations, as shown in FIG. 8, a belt pulley 32 is disposed at one end of the rotating shaft 20, and the balance ring 300 is disposed at the other end thereof.

According to some embodiments of the present application, exemplarily, in some implementations, in the case that the balance machining portion 3 is located outside the housing 1, the balance machining portion 3 and the rotary component 2 are of an integrated structure.

In the embodiment, in the case that the balance machining portion 3 is disposed outside the housing 1, the balance machining portion 3 and the rotary component 2 are of an integrated structure. The integrated structure design ensures the connection strength between the balance machining portion 3 and the rotary component 2, which prevents the change of the overall dynamic balance of the electric motor caused by the position change of the balance machining portion 3 during the operation of the electric motor.

It can be understood that the balance machining portion 3 can be connected to the rotary component 2 either by welding or by bonding.

According to some embodiments of the present application, exemplarily, in some implementations, the balance machining portion 3 comprises a metal machining portion or a plastic machining portion.

In the embodiment, the balance machining portion 3 comprises the metal machining portion or the plastic machining portion. That is to say, the balance machining portion 3 can be a plastic product to facilitate the weight addition or removal process on the balance machining portion 3; the balance machining portion 3 can further be a metal product to enhance the connection strength between the balance machining portion 3 and the rotary component 2.

According to an embodiment of the present application, a washing device is further provided, which comprises the electric motor provided in any one of the above embodiments.

The washing device provided in the present application comprises the electric motor provided in any of the above embodiments, and thus has all the beneficial effects of the electric motor.

Exemplarily, in some implementations, the washing device comprises any one of a washing machine and a washer-dryer integrated machine. Specifically, it may be a top-loading washing machine or a front-loading washing machine.

According to an embodiment of the present application, a dynamic balance adjusting method for an electric motor is further provided, which is applied to the electric motor provided in any one of the above embodiments.

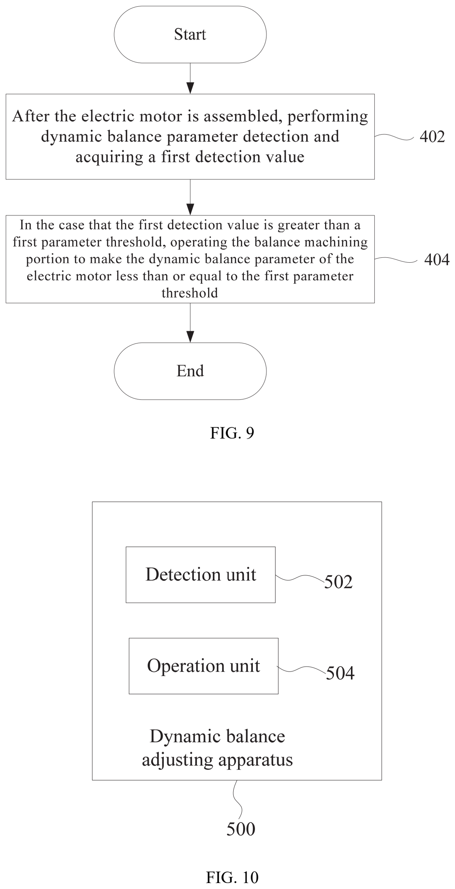

As shown in FIG. 9, it shows a schematic flowchart of a dynamic balance adjusting method for an electric motor.

S402: After the electric motor is assembled, measuring the dynamic balance parameter to acquire a first measured value;
S404: In the case that the first measured value is greater than a first parameter threshold, processing the balance machining portion to make the dynamic balance parameter of the electric motor less than or equal to the first parameter threshold.

For the dynamic balance adjusting method for an electric motor provided in the present application, after the electric motor is assembled, the dynamic balance parameter measurement is performed for the entire electric motor, then the balance machining portion located outside the outer shell of the electric motor is processed or the balance machining portion located inside the electric motor is processed through the clearance hole based on a measured result, to achieve adjusting the overall dynamic balance of the electric motor, and the dynamic balance parameter of the electric motor is less than or equal to the first parameter threshold, thus further improving the vibration condition of the electric motor. Specifically, in the case that the first measured value is greater than the first parameter threshold, it indicates that the dynamic balance of the electric motor does not meet the requirements. The balance machining portion is processed at this moment, and the dynamic balance parameter of the electric motor is reduced to the first parameter threshold, to meet the dynamic balance requirements of the electric motor.

It should be noted that the present application performs dynamic balance measurement on the entire electric motor, and then processes the balance machining portion based on the first measured value to increase or decrease the weight of the balance machining portion, to make the overall dynamic balance parameter of the electric motor meet the requirements and improving the vibration condition of the electric motor. In addition, when a defective product with nonconforming dynamic balance occurs, there is no need to disassemble the electric motor for repair, and the balance machining portion located outside the housing can be directly processed or the balance machining portion located inside the housing can be processed through the clearance hole to adjust the overall dynamic balance of the electric motor. In addition, when the dynamic balance of the electric motor is measured after the electric motor is assembled, the rotary component can further be tested at an operating speed, to evaluate the dynamic balance of the electric motor in a normal operating state and effectively improving the vibration problem of the electric motor.

Exemplarily, in some implementations, processing the balance machining portion comprises performing weight addition or removal processing on the balance machining portion.

Exemplarily, in some implementations, the first parameter threshold may be set based on actual conditions.

Exemplarily, in some implementations, the first parameter threshold comprises a dynamic balance grade.

According to some embodiments of the present application, exemplarily, in some implementations, the step of performing dynamic balance parameter measurement after the electric motor is assembled comprises: controlling the electric motor to start and rotate at a target rotation speed.

In the embodiment, during the measurement of the dynamic balance parameter of the entire electric motor, the electric motor is controlled to start and is made to rotate at the target rotation speed through its own electromagnetic drive, and then the overall dynamic balance parameter of the electric motor is measured at the target rotation speed.

Exemplarily, in some implementations, the target rotation speed is set based on actual conditions. The target rotation speed may be the rotation speed of the electric motor in an operating state, or other set values, which may be lower than or higher than the rotation speed in the operating state.

According to some embodiments of the present application, exemplarily, in some implementations, the target rotation speed comprises the rotation speed of the electric motor in the operating state.

In the embodiment, the target rotation speed comprises the rotation speed of the electric motor in the operating state. That is to say, the dynamic balance of the electric motor is tested in the operating state of the electric motor, and the test conditions is close to a service state, which can eliminate the interference of the position deviation of the bearing of the rotor in the end cover with the dynamic balance test, and can further take into account the imbalance caused by rotor deformation under the action of high-speed centrifugal force, and meanwhile, the vibration amount caused by the imbalance at a high rotation speed is greater, which can improve the signal-to-noise ratio of a test signal.

It is understandable that the rotation speed of the electric motor in the operating state, i.e., the rotation speed of the electric motor when it is applied and operates in electrical equipment, enables the rotor to reach a service rotation speed under the driving of the electric rotor itself.

Wherein, there can be one or a plurality of rotation speeds of the electric motor in the operating state. For example, when the electric motor is applied in the electrical equipment, since the electrical equipment has a plurality of modes, the electric motor correspondingly has a plurality of operating states, resulting in different rotation speeds of the electric motor in different operating states. The target rotation speed can be at least one of the rotation speeds corresponding to the different operating states.

According to some embodiments of the present application, exemplarily, in some implementations, the rotary component comprises a rotor. Before the step of performing dynamic balance parameter measurement after the electric motor is assembled, the embodiments further comprise: performing dynamic balance parameter measurement for the rotor and acquiring a second measured value; and processing the rotor based on the second measured value to make the dynamic balance parameter of the rotor less than or equal to a second parameter threshold.

In the embodiment, the rotary component comprises a rotor. Before conducting the dynamic balance measurement on the entire electric motor, the embodiments further comprise performing dynamic balance measurement on the rotor and processing the rotor based on the second measured value acquired from the measurement, and the dynamic balance parameter of the rotor is less than or equal to the second parameter threshold. That is to say, dynamic balance measurement is first conducted on the rotor, when the dynamic balance measured value fails to meet the requirements, the rotor is processed to reduce its imbalance amount to a certain level, and then the entire electric motor is assembled, and then the dynamic balance measurement on the entire electric motor is conducted, to achieve high-precision dynamic balance adjustment.

It can be understood that in the case that the second measured value is greater than the second parameter threshold, the rotor is processed to make the dynamic balance parameter of the rotor less than or equal to the second parameter threshold.

It should be noted that the second parameter threshold is a preset parameter, which may be the dynamic balance grade.

According to some embodiments of the present application, exemplarily, in some implementations, processing the balance machining portion comprises at least one operation of cutting, drilling and dispensing the balance machining portion; and processing the rotor comprises at least one operation of cutting, drilling and dispensing the rotor.

In the embodiment, processing the balance machining portion may specifically comprise at least one operation of cutting, drilling and dispensing the balance machining portion, to increase or decrease the weight of the balance machining portion and to reduce the dynamic balance parameter. Processing the rotor comprises at least one operation of cutting, drilling and dispensing the rotor, to increase or decrease the weight of the rotor and to reduce the dynamic balance parameter of the rotor.

As shown in FIG. 10, according to an embodiment of the present application, a dynamic balance adjusting apparatus 500 of an electric motor is provided, which comprises a measurement unit 502 configured to measure the dynamic balance parameter to acquire a first measured value after the electric motor is assembled; and a processing unit 504 configured to process the balance machining portion to make the dynamic balance parameter of the electric motor less than or equal to the first parameter threshold in the case that the first measured value is greater than the first parameter threshold.

The dynamic balance adjusting apparatus 500 provided in the present application comprises the measurement unit 502 and the processing unit 504. After the electric motor is assembled, the measurement unit 502 measures the dynamic balance parameters of the entire electric motor. Then, based on the measured result, the processing unit 504 processes the balance machining portion located outside the outer shell of the electric motor or processes the balance machining portion located inside the electric motor through the clearance hole, to adjust the overall dynamic balance of the electric motor, then make the dynamic balance parameter of the electric motor less than or equal to the first parameter threshold, and further improve the vibration condition of the electric motor. Specifically, in the case that the first measured value is greater than the first parameter threshold, it indicates that the dynamic balance of the electric motor fails to meet the requirements. The balance machining portion is processed at this moment to reduce the dynamic balance parameter of the electric motor to the first parameter threshold, to satisfy the dynamic balance requirements of the electric motor.

It should be noted that the present application performs dynamic balance measurement on the entire electric motor, and then processes the balance machining portion based on the first measured value to increase or decrease the weight of the balance machining portion, to make the overall dynamic balance parameter of the electric motor meet the requirements and improving the vibration condition of the electric motor. In addition, when a defective product with nonconforming dynamic balance occurs, there is no need to disassemble the electric motor for repair and the balance machining portion located outside the housing can be directly processed or the balance machining portion located inside the housing can be processed through the clearance hole to adjust the overall dynamic balance of the electric motor. In addition, when the dynamic balance of the electric motor is measured after its assembly is completed, the rotary component can further be tested at an operating speed, to evaluate the dynamic balance of the electric motor in a normal operating state and effectively improving the vibration problem of the electric motor.

Exemplarily, in some implementations, processing the balance machining portion comprises performing weight addition or removal processing on the balance machining portion.

Exemplarily, in some implementations, the first parameter threshold may be set based on actual conditions.

Exemplarily, in some implementations, the first parameter threshold comprises the dynamic balance grade.

According to some embodiments of the present application, exemplarily, in some implementations, the step of measuring the dynamic balance parameter by the measurement unit 502 after the electric motor is assembled comprises: controlling the electric motor to start and rotate at the target rotation speed.

In the embodiment, during the measurement of the dynamic balance parameter of the entire electric motor, the electric motor is controlled to start and is made to rotate at the target rotation speed through its own electromagnetic drive, and then the dynamic balance parameter of entire the electric motor is measured at the target rotation speed.

Exemplarily, in some implementations, the target rotation speed is set based on actual conditions. The target rotation speed may be the rotation speed of the electric motor in an operating state, or other set values, which may be lower than or higher than the rotation speed in the operating state.

According to some embodiments of the present application, exemplarily, in some implementations, the target rotation speed comprises the rotation speed of the electric motor in the operating state.

In the embodiment, the target rotation speed comprises the rotation speed of the electric motor in the operating state. That is to say, the dynamic balance of the electric motor is tested in the operating state of the electric motor, and the test conditions is close to a service state, which can eliminate the interference of the position deviation of the bearing of the rotor in the end cover with the dynamic balance test, and can further take into account the imbalance caused by rotor deformation under the action of high-speed centrifugal force. Meanwhile, the vibration amount caused by the imbalance at a high rotation speed is greater, which can improve the signal-to-noise ratio of a test signal.

It can be understood that the rotation speed of the electric motor in the operating state, i.e., the rotation speed of the electric motor when it is applied and operates in electrical equipment, enables the rotor to reach a service rotation speed under the driving of the electric rotor itself.

Wherein, there can be one or a plurality of rotation speeds of the electric motor in the operating state. For example, when the electric motor is applied in the electrical equipment, since the electrical equipment has a plurality of modes, the electric motor correspondingly has a plurality of operating states, resulting in different rotation speeds of the electric motor in different operating states. The target rotation speed can be at least one of the rotation speeds corresponding to the different operating states.

According to some embodiments of the present application, exemplarily, in some implementations, the rotary component comprises a rotor. Before the step of measuring the dynamic balance parameter after the electric motor is assembled, the measurement unit 502 is further configured to measure the dynamic balance parameter for the rotor and acquire a second measured value; and the processing unit 504 is further configured to process the rotor based on the second measured value to make the dynamic balance parameter of the rotor less than or equal to a second parameter threshold.

In the embodiment, the rotary component comprises a rotor. Before conducting the dynamic balance measurement on the entire electric motor, the embodiments further comprise performing dynamic balance measurement on the rotor and processing the rotor based on the second measured value acquired from the measurement, and the dynamic balance parameter of the rotor is less than or equal to the second parameter threshold. That is to say, dynamic balance measurement is first conducted on the rotor, when the dynamic balance measured value fails to meet the requirements, the rotor is processed to reduce its imbalance amount to a certain level, and then the entire electric motor is assembled, and then the dynamic balance measurement on the entire electric motor is conducted, to achieve high-precision dynamic balance adjustment.

It can be understood that in the case that the second measured value is greater than the second parameter threshold, the rotor is processed to make the dynamic balance parameter of the rotor less than or equal to the second parameter threshold.

It should be noted that the second parameter threshold is a preset parameter, which may be the dynamic balance grade.

According to some embodiments of the present application, exemplarily, in some implementations, processing the balance machining portion by the processing unit 504 comprises at least one operation of cutting, drilling and dispensing the balance machining portion; and processing the rotor by the processing unit 504 comprises at least one operation of cutting, drilling and dispensing the rotor.

In the embodiment, processing the balance machining portion may specifically comprise at least one operation of cutting, drilling and dispensing the balance machining portion, to increase or decrease the weight of the balance machining portion and to reduce the dynamic balance parameter. Processing the rotor comprises at least one operation of cutting, drilling and dispensing the rotor, to increase or decrease the weight of the rotor and to reduce the dynamic balance parameter of the rotor.

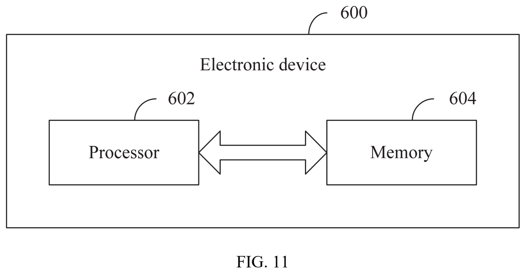

As shown in FIG. 11, according to an embodiment of the present application, an electronic device 600 is provided, comprising: the dynamic balance adjusting apparatus 500 of an electric motor provided in any one of the above items; and/or a processor 602 and a memory 604, wherein, the memory 604 stores programs or instructions that can run in the processor 602, and when the programs or instructions are executed by the processor 602, the steps of the dynamic balance adjusting method for an electric motor provided in any one of the above items are implemented. Therefore, the electronic device has all the beneficial effects of the dynamic balance adjusting apparatus 500 or the dynamic balance adjusting method for an electric motor, which is not repeated here.

According to an embodiment of the present application, a computer-readable storage medium is provided, in which programs or instructions are stored. When the programs or instructions are executed by the processor 602, the dynamic balance adjusting method for an electric motor provided in any one of the above items is implemented. Therefore, the computer-readable storage medium has all the beneficial effects of the dynamic balance adjusting method, which is not repeated here.

In a specific application, the dynamic balance test of the electric motor is carried out after the end cover 14 is assembled. The test is performed on a dynamic balance bench, and the electric motor rises to a stable rotation speed with electromagnetic driving.

Exemplarily, in some implementations, the electric motor is provided with a component (e.g., the balance machining portion 3) that can be subject to balance processing outside the end cover 14. The balance machining portion 3 can be an independent weight-removing end ring (e.g., the balance ring 300), or can further be integrated with structures such as the belt pulley 32. The material of the weight-removing component can be metal products or plastic products. The balance machining portion 3 can be subjected to balance processing by weight removal or weight addition. The balance machining portion 3 can be disposed at one end or two ends of the rotating shaft 20.

According to the embodiments provided in the present application, the dynamic balance test of the entire electric motor is closer to the service state of the electric motor, wherein the interference of the position deviation of the bearing of the rotor 22 in the end cover 14 with the dynamic balance test is eliminated; the rotor 22 can reach the service rotation speed driven by the electric motor itself, which allows taking into account the imbalance caused by the deformation of the rotor 22 under the action of a high-speed centrifugal force, and meanwhile, the vibration caused by the imbalance amount at high rotation speeds is greater, which can improve the signal-to-noise ratio of the test signal.

Exemplarily, in some implementations, the dynamic balance of the entire electric motor can be combined with the dynamic balance of a conventional rotor 22. After the imbalance amount of the rotor 22 is reduced to a certain level through the dynamic balance of the conventional rotor 22, high-precision dynamic balance is achieved through the dynamic balance process of the entire electric motor. In the dynamic balance process of the rotor 22 in the related art, if the vibration of the electric motor is unqualified due to the dynamic balance, it is necessary to disassemble the electric motor for repair, which results in a high repair cost and a low qualification rate. In contrast, the dynamic balance of the entire electric motor provided in the present application can directly adjust the balance of the electric motor, to reduce the repair cost.

Exemplarily, in some implementations, the present application further provides a design scheme for the rotor 22 matching the dynamic balance scheme for the entire electric motor, which allows secondary processing of the rotor 22 when the electric motor is in an assembled state.

Exemplarily, in some implementations, the balance machining portion 3 is not necessarily located on the outer side of the end cover 14 of the electric motor; the rotor 22 can further be processed by drilling holes in the end cover 14. However, the dynamic balance test for the entire electric motor needs to be conducted after the end cover 14 is assembled.

In the present application, the term of "a plurality of" indicates two or more than two, unless otherwise explicitly defined. Terms such as "install", "connect with", "connect to" and "fix" shall be understood in a broad sense. For example, "connect with" may be a fixed connection, a detachable connection, or an integral connection; "connect to" may be a direct connection or an indirect connection through an intermediate medium. For those of ordinary skill in the art, the specific meanings of the above terms in the present application can be understood based on specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on made should be covered within the scope of protection of the present application.

## Claims

1. An electric motor, comprising:
a housing;
a rotary component, wherein part of the rotary component is disposed in the housing, and two ends of the rotary component extend out of the housing along an axis of rotation of the rotary component; and
a balance machining portion disposed on the rotary component, wherein the balance machining portion is located in or outside the housing and is configured to be processed so as to adjust a dynamic balance parameter of the electric motor,
wherein in the case that the balance machining portion is located in the housing, a clearance hole is provided on the housing and positioned corresponding to the balance machining portion to allow the balance machining portion to be processable through the clearance hole.

2. The electric motor according to claim 1, wherein the housing comprises:
an outer shell, wherein the rotary component is located inside the outer shell; and
end covers, disposed at two ends of the outer shell along the axis of rotation,
wherein in the case that the balance machining portion is located in the housing, the clearance hole is disposed in the end covers.

3. The electric motor according to claim 2, wherein the rotary component comprises:
a rotating shaft, wherein a part of the rotating shaft is disposed inside the outer shell, and two ends of the rotating shaft extend from the end covers to an exterior of the outer shell; and
a rotor, disposed inside the outer shell and connected to the rotating shaft,
wherein:
in the case that the balance machining portion is located outside the housing, the balance machining portion is disposed on at least one of the two ends of the rotating shaft; and
in the case that the balance machining portion is disposed inside the outer shell, the balance machining portion is disposed on the rotor.

4. The electric motor according to claim 3, wherein in the case that the balance machining portion is disposed on the rotor, the balance machining portion is a part of the rotor.

5. The electric motor according to claim 3 or 4, wherein the balance machining portion comprises a balance block.

6. The electric motor according to claim 5, wherein the balance block comprises a balance ring disposed around an outer side of the rotating shaft.

7. The electric motor according to any one of claims 3 to 6, wherein the balance machining portion comprises a belt pulley disposed on the rotating shaft.

8. The electric motor according to any one of claims 1 to 7, wherein in the case that the balance machining portion is located outside the housing, the balance machining portion and the rotary component are of an integrated structure.

9. The electric motor according to any one of claims 1 to 8, wherein the balance machining portion comprises a metal machining portion or a plastic machining portion.

10. A washing device, comprising the electric motor according to any one of claims 1 to 9.

11. A dynamic balance adjusting method for an electric motor, applied to the electric motor according to any one of claims 1 to 9, wherein the adjusting method comprises:
performing measurement of a dynamic balance parameter of the electric motor after the electric motor is assembled to acquire a first measured value; and
in the case that the first measured value is greater than a first parameter threshold, processing the balance machining portion to adjust the dynamic balance parameter of the electric motor to be less than or equal to the first parameter threshold.

12. The dynamic balance adjusting method for an electric motor according to claim 11, wherein the step of performing measurement of the dynamic balance parameter of the electric motor after the electric motor is assembled comprises:
controlling the electric motor to start and rotate at a target rotation speed.

13. The dynamic balance adjusting method for an electric motor according to claim 12, wherein the target rotation speed comprises a rotation speed of the electric motor in an operating state.

14. The dynamic balance adjusting method for an electric motor according to any one of claims 11 to 13, wherein the rotary component comprises a rotor, and before the step of performing measurement of the dynamic balance parameter of the electric motor after the electric motor is assembled, the method further comprises:
performing measurement of a dynamic balance parameter of the rotor to acquire a second measured value; and
in the case that the second measured value is greater than a second parameter threshold, processing the rotor to adjust the dynamic balance parameter of the rotor to be less than or equal to the second parameter threshold.

15. The dynamic balance adjusting method for an electric motor according to claim 14, wherein:
said processing the balance machining portion comprises performing at least one of cutting, drilling and adhesive dispensing operations on the balance machining portion; and
said processing the rotor comprises performing at least one of cutting, drilling and adhesive dispensing operations on the rotor.

16. A dynamic balance adjusting apparatus of an electric motor, comprising:
a measurement unit configured to perform measurement of a dynamic balance parameter of the electric motor after the electric motor is assembled to acquire a first measured value; and
a processing unit configured to process a balance machining portion to adjust the dynamic balance parameter of the electric motor to be less than or equal to a first parameter threshold in the case that the first measured value is greater than the first parameter threshold.

17. An electronic device, comprising:
the dynamic balance adjusting apparatus of an electric motor according to claim 16; and/or
a processor and a memory having stored thereon programs or instructions executable by the processor, wherein when the programs or instructions are executed by the processor, the steps of the dynamic balance adjusting method for an electric motor according to any one of claims 11 to 15 are implemented.

18. A computer-readable storage medium, having programs or instructions stored therein, wherein when the programs or instructions are executed by a processor, the dynamic balance adjusting method for an electric motor according to any one of claims 11 to 15 is implemented.
